# EUROPÄISCHE PATENTSCHRIFT

(11) **EP 0 669 519 B1**
(45) Veröffentlichungstag und Bekanntmachung des Hinweises auf die Patenterteilung: **03.05.2000**
(21) Anmeldenummer: 95102334.0
(22) Anmeldetag: 20.02.1995
(51) Int. Cl.: G01D 5/38, G02B 5/18

(54) **Positionsmessvorrichtung**
Position measuring device
Dispositif de mesure de positions

(30) Priorität: 23.02.1994 DE 4405843; 07.09.1994 DE 4431899
(43) Veröffentlichungstag der Anmeldung: 30.08.1995
(73) Patentinhaber: Dr. Johannes Heidenhain GmbH, 83292 Traunreut (DE)
(72) Erfinder: Holzapfel, Wolfgang, Dr., D-83119 Obing (DE); Huber, Walter, D-83278 Traunstein (DE)

(56) Entgegenhaltungen:
- EP-A- 0 102 472
- EP-A- 0 513 427
- GB-A- 2 070 766
- GB-A- 2 238 865

## Beschreibung

Die Erfindung betrifft eine Positionsmeßvorrichtung zum Erzeugen von positionsabhängigen Signalen.

Aus der DE 33 07 931 C2 ist eine derartige Positionsmeßvorrichtung bekannt, von der diese Erfindung ausgeht. Zur Erzeugung von mehreren gegeneinander phasenverschobenen positionsabhängigen Abtastsignalen sind mehrere Detektoren in einer Abtasteinheit angeordnet. Ein Abgleich der von den Detektoren erzeugten Abtastsignale erfolgt elektrisch, indem in der Abtasteinheit ein zusätzlicher Detektor zur Erfassung eines von einer Lichtquelle ausgehenden und durch den Maßstab hindurchgehenden unmodulierten Lichtstrahlenbündels vorgesehen ist. Ein Teil dieses Detektorsignales wird den Abtastsignalen mittels einer elektrischen Schaltung überlagert. Eine ähnliche Einrichtung ist in der DE 39 40 387 A1 beschrieben.

In der DE 34 16 864 C2 ist eine Referenzmarke beschrieben, deren Teilungsmarkierungen auf dem Maßstab als transversale Phasengitter ausgebildet sind. Takt- und Gegentaktsignal lassen sich aus einem Referenzmarkenfeld ableiten.

Eine ähnliche Referenzmarke ist in der EP 0 363 620 B1 beschrieben.

Gemäß der EP 0 513 427 A1 wird mit Hilfe von gechirpten Teilungen und einer interferentiellen Abtastung ein kurzer Referenzimpuls in einem großen Abtastabstand erzeugt.

Nachteilig ist bei all diesen Anordnungen, daß die Impulse der Takt- und Gegentaktsignale bezüglich Nutz- und Gleichlichtanteil unterschiedlich groß sind. Durch die in der EP 0 513 427 A1 beschriebene Maßnahme zur Beeinflussung des Gegentaktsignales kann dieser Nachteil nicht behoben werden, da ausschließlich außerhalb der Referenzmarkenposition ein zusätzliches Lichtstrahlenbündel mittels eines Prismas auf den Detektor zur Erzeugung des Gegentaktsignals gerichtet wird. Dadurch kann nur der Störabstand zwischen Takt- und Gegentaktsignal außerhalb der Referenzmarkenposition verbessert werden.

Zur optischen Trennung von mehreren Lichtstrahlenbündeln sind gemäß der EP 0 363 620 B1, EP 0 482 224 B1, DE 35 41 199 C1, DE 43 16 250 A1 sowie der DE 92 09 777 U1 Prismen vorgesehen.

Zum Abgleich mehrerer gegeneinander phasenverschobener Signale sind gemäß der EP 0 102 472 B1 Blenden im Strahlengang vorgesehen.

Anstelle der Blenden ist gemäß der DE 30 07 311 C2 ein elektrischer Abgleich mittels eines regelbaren Potentiometers vorgesehen.

Aufgabe der Erfindung ist es, bei einer Positionsmeßvorrichtung zum Erzeugen von positionsabhängigen Signalen mit relativ einfachen Mitteln eine Optimierung der Meßsignale zu realisieren.

Die Erfindung löst die gestellte Aufgabe mit den Merkmalen des Anspruches 1.

Ein Vorteil der Erfindung liegt darin, daß die zum Abgleich benötigten optischen Elemente einfach, insbesondere durch die gleichen photolithografischen Herstellverfahren wie die Gitter der Maßverkörperung sowie der Abtastplatte gefertigt werden können.

Mit Hilfe von Ausführungsbeispielen wird die Erfindung anhand der Zeichnungen näher erläutert.

Es zeigt
- Figur 1: eine schematisch dargestellte Meßvorrichtung gemäß der Erfindung;
- Figur 2: eine um 90° verdrehte Ansicht der Meßvorrichtung gemäß Figur 1;
- Figur 3: einen Ausschnitt der Abtastplatte nach Figur 1 und 2;
- Figur 4: einen Ausschnitt der Maßverkörperung nach Figur 1 und 2;
- Figur 5: einen weiteren Ausschnitt einer Abtastplatte;
- Figur 6: einen weiteren Ausschnitt einer Maßverkörperung;
- Figur 7: eine Draufsicht der Abtastplatte und der Maßverkörperung gemäß den Figuren 1 und 2;
- Figur 8: einen Signalverlauf des Takt- und Gegentaktsignals;
- Figur 9: Signalverläufe zur Erzeugung des Taktsignals gemäß Figur 8;
- Figur 10: Signalverläufe zur Erzeugung des Gegentaktsignals gemäß Figur 8 und
- Figur 11 bis 13: weitere Maßverkörperungen und Abtastplatten zum Signalabgleich.

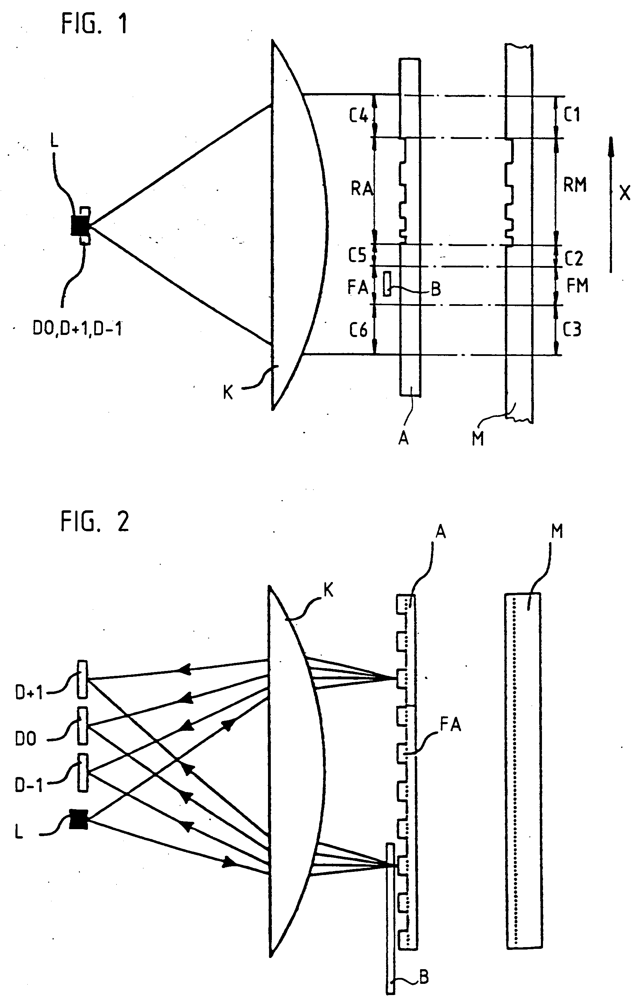

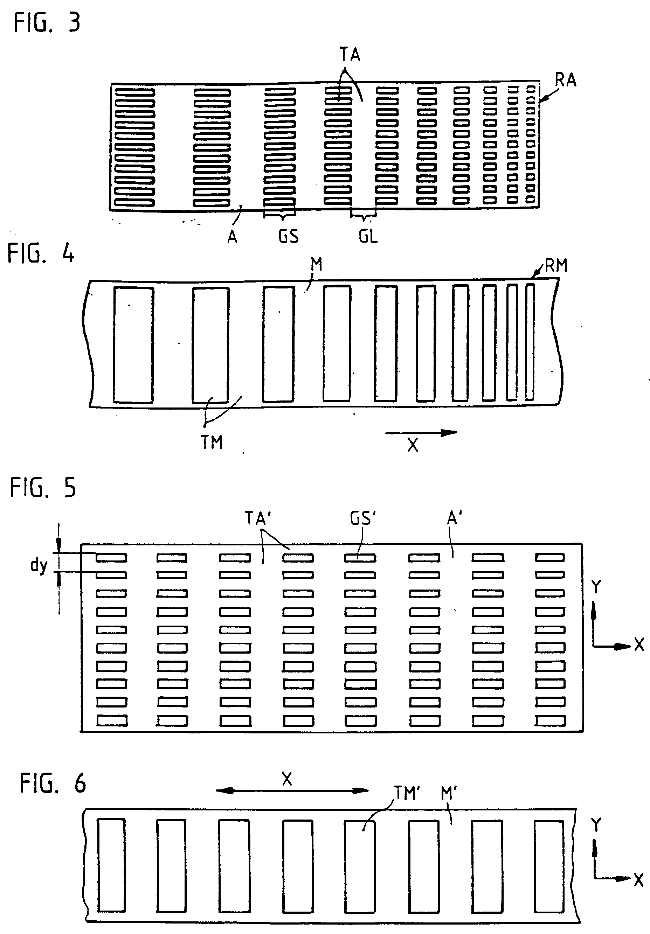

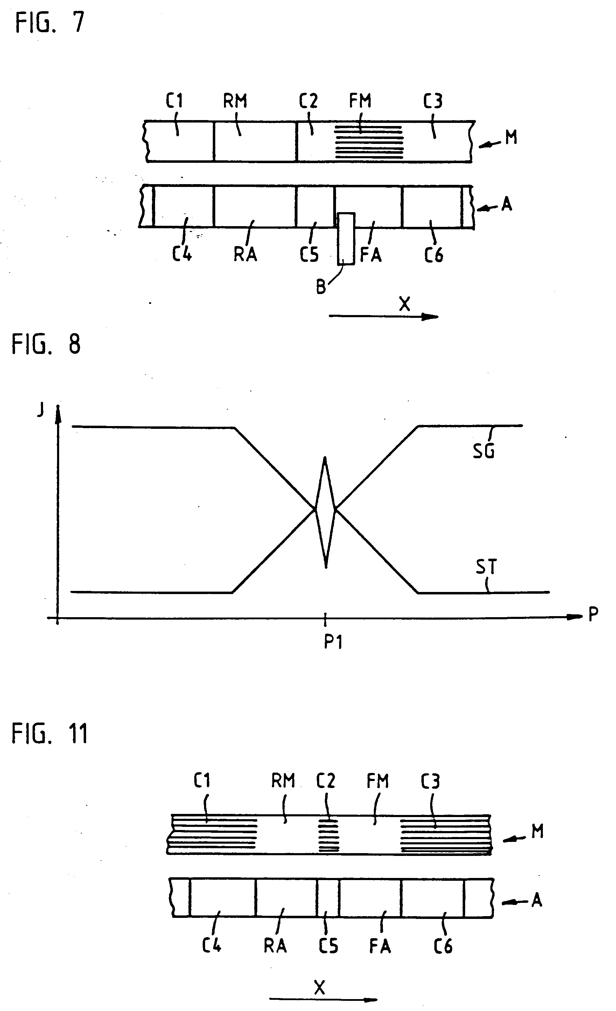

Figur 1 zeigt schematisch eine inkrementale Meßvorrichtung mit einer Referenzmarkenanordnung. Das Licht einer Lichtquelle L wird durch eine Linse K kollimiert und beleuchtet eine Anordnung bestehend aus einer Abtastplatte A und einem reflektierenden Maßstab M. Die Abtastplatte A wird zweimal durchlaufen. Die Kollimatorlinse K lenkt das austretende Lichtbündel auf mehrere Fotoelemente D0, D±1, die ein Takt- bzw. ein Gegentaktsignal ST, SG (Figur 8) liefern. Der Maßstab M trägt gemäß Figur 4 eine Phasenteilung TM mit in Meßrichtung X abwechselnd angeordneten reflektierenden und nicht reflektierenden Stegen, welche senkrecht zur Meßrichtung X verlaufen und deren Breite sich stetig in Meßrichtung ändert (gechirpt). Die Teilung TA der Abtastplatte A besteht gemäß Figur 3 aus einer in Meßrichtung X gechirpten Phasenstruktur, die sich zusammensetzt aus transparenten Lücken GL und strukturierten Stegen GS, wobei sich die Breite und der Abstand der Stege GS stetig in Meßrichtung X ändert. Die strukturierten Stege GS sind streifenförmige, periodische Phasengitter, deren Stege zumindest weitgehend parallel zur Meßrichtung X verlaufen. Jeder dieser Gitterstreifen GS lenkt das Licht in verschiedene "transversale" Beugungsordnungen zumindest weitgehend senkrecht zur Meßrichtung X ab. Sie sind so ausgebildet, daß die nullte transversale Beugungsordnung des Gitterstreifens unterdrückt wird. Die Wirkung dieser Abtaststruktur läßt sich am einfachsten verstehen, wenn man nacheinander die Richtungen der durch die Abtastplatte A hindurchgehenden bzw. quer zur Meßrichtung X abgelenkten Lichtbündel im Fernfeld, d.h. die in verschiedene transversale Beugungsordnungen abgelenkten Lichtbündel betrachtet: In nullter transversaler Beugungsordnung tritt Licht durch die Lücken GL, nicht aber durch die strukturierten Stege GS. Die Abtaststruktur erscheint deshalb als gechirpte Amplitudenteilung mit transparenten Lücken GL und opaken Stegen GS. Betrachtet man in ±1. transversaler Beugungsordnung, so erhält man kein Licht mehr von den Lücken GL, dafür aber Licht von den Stegen GS. Die Abtaststruktur erscheint als inverse gechirpte Amplitudenteilung mit opaken Lücken GL und transparenten Stegen GS. Anstelle der transparenten Lücken GL können auch transversale Gitterstreifen, deren Stege ebenfalls parallel zur Meßrichtung verlaufen Verwendung finden, wobei sich die Teilungsperiode des Gitters im Bereich GS von der Teilungsperiode des Gitters im Bereich GL unterscheidet.

Im folgenden werden die Strahlenbündel, die beim ersten Durchgang durch die Abtastplatte A in n-ter und beim zweiten Durchgang in m-ter transversaler Beugungsordnung abgelenkt werden als n/m-Strahlenbündel bezeichnet. Das 0/0-Strahlenbündel tritt in nullter resultierender Beugungsordnung aus der Teilungsanordnung aus und trifft auf das Fotoelement D0. Dieses Strahlenbündel "sieht" bei beiden Durchgängen die Abtaststruktur als reguläre (d.h. nicht inverse) Amplitudenteilung und erzeugt einen entsprechenden Signalanteil. Insbesondere bestimmen die Stegkantenpositionen der gechirpten Teilungen den Signalverlauf dieses Signalanteils und können beispielsweise so gewählt werden, daß ein Takt- oder ein Gegentaktsignalanteil SG, ST erzeugt wird. Diese Maßnahme ist an sich in der EP 0 513 427-A1 erläutert, worauf ausdrücklich Bezug genommen wird, so daß sich hierzu weitere Ausführungen erübrigen.

Das +1/-1 - und das -1/+1 - Strahlenbündel tritt ebenfalls in nullter resultierender Beugungsordnung aus und wird auf das Fotoelement D0 gelenkt. In diesen Fällen wirkt die Abtaststruktur zweimal als inverse Amplitudenteilung. Bei einer lokalen Betrachtung entspricht der Übergang von einer regulären zu einer inversen Amplitudenteilung einer Verschiebung der Abtastplatte A um eine halbe Teilungsperiode. Beim hier vorliegenden interferentiellen Abtastprinzip (Überlagerung einer +1. und einer -1. Beugungsordnung des Maßstabs M d.h. Beugung in Meßrichtung X; eine Teilungsperiode = zwei Signalperioden) führt eine solche Verschiebung zu einer Phasenänderung des Signals um 360° d.h. zur ursprünglichen Phasenlage. Der Übergang zu einer inversen Amplitudenteilung ändert deshalb nicht die Signalform, so daß das +1/-1 und das -1/+1 - Strahlenbündel ebenso moduliert sind wie das 0/0 - Strahlenbündel. Das gleiche gilt für alle anderen, auf D0 gelangenden n/-n - Strahlenbündel, die ebenfalls in nullter resultierender Beugungsordnung, also senkrecht zur Abtastplatte A austreten.

Das ±1/0 und das 0/±1 - Strahlenbündel tritt in ±1. resultierender Beugungsordnung aus und gelangt auf die Fotoelemente D±1. Bei diesen strahlenbündeln wirkt die Abtaststruktur einmal als reguläre und einmal als inverse Amplitudenteilung. Der Signalverlauf der zugehörigen Signalanteile von D+1 und D-1 ist aus symmetriegründen identisch. Eine genauere Analyse zeigt, daß diese Signalanteile invers zu dem Signal des Fotoelements D0 moduliert sind. Liefert das Fotoelement D0 beispielsweise ein Taktsignal ST (Gegentaktsignal), so erhält man über D+1 oder auch D-1 ein zugehöriges Gegentaktsignal SG (Taktsignal). Man erhält somit die gewünschte Einfeld-Gegentakt-Abtastung.

Unter Berücksichtigung aller beliebigen n/m -Strahlenbündel erweist es sich als besonders günstig, alle geraden transversalen Beugungsordnungen der strukturierten Stege GS zu unterdrücken, indem diese beispielsweise als Stufengitter mit gleichen Steg- und Lückenbreiten sowie einer Phasentiefe von 180° ausgebildet sind. Außerdem ist es vorteilhaft, die lokale Breite der Stege GS und der Lücken GL der gechirpten Teilung gleich zu wählen.

Arbeitet die Meßvorrichtung nach dem beschriebenen interferentiellen Abtastverfahren bei dem in Meßrichtung X symmetrisch gebeugte Strahlen ± n-ter Ordnung, vorzugsweise ± 1. Ordnung miteinander interferieren, ist es weiterhin vorteilhaft, daß der Maßstab M so ausgebildet ist, daß die nullte Beugungsordnung unterdrückt wird.

Die Strahlenbündel, die beim ersten Durchgang durch die Abtastplatte A in verschiedene transversale Beugungsordnungen aufgespalten werden, überlagern sich beim zweiten Durchgang jeweils in den einzelnen resultierenden Beugungsordnungen. Diese Überlagerung muß inkohärent erfolgen, da bei einer kohärenten Überlagerung die unterschiedlichen optischen Weglängen zu einer starken Abhängigkeit der Signalform vom Abtastabstand führen würden. Eine inkohärente Überlagerung bedeutet dabei nicht, daß die einzelnen Teilstrahlenbündel, die überlagert werden, nicht mehr interferieren dürfen. Es kann ebenso über eine Mittelung vieler verschiedener Weglängenunterschiede der miteinander interferierenden Teilstrahlenbündel erreicht werden, so daß in der Summe der von der Lichtquelle ausgehenden und von jedem der Fotoelemente erfaßten Strahlenbündel keine einheitliche konstruktive oder destruktive Interferenz mehr auftritt, d.h. eine inkohärente Überlagerung der Summe der Teilstrahlenbündel erreicht wird. Die Erzeugung verschiedener Weglängenunterschiede d.h. die inkohärente Überlagerung kann durch verschiedene Maßnahmen erzielt werden, wobei es unerheblich ist, ob es sich um eine Meßvorrichtung mit inkrementalen, codierten oder Referenzsignalen handelt.

Eine inkohärente Überlagerung gleicher resultierender Beugungsordnungen wird dadurch erreicht, daß die beim ersten Durchgang durch die Abtastplatte A eines einzigen Beleuchtungs-Teilstrahlenbündels transversal gebeugten Teilstrahlenbündel nach dem zweiten Durchgang durch die Abtastplatte A in mehrere gleiche resultierende Beugungsordnungen (bezogen auf die Richtung) aufgespalten werden, wobei diese resultierenden Beugungsordnungen nicht miteinander interferieren können. Dies wird erreicht, indem die Lichtquelle L ein breites Wellenlängenspektrum und eine kurze Kohärenzlänge aufweist.

Der Abtastabstand D, d.h. der Abstand zwischen der Abtastplatte A und dem Maßstab M wird demnach so groß gewählt, daß der Weglängenunterschied S₂ - S₁ größer als die Kohärenzlänge der Lichtquelle L wird und die beim ersten Durchgang durch die Abtastplatte A in verschiedene transversale Beugungsordnungen aufgespaltenen Strahlenbündel, die beim zweiten Durchgang durch die Abtastplatte A überlagert werden, nicht miteinander interferieren können.

Eine weitere Möglichkeit der inkohärenten Überlagerung besteht darin, daß die resultierenden Beugungsordnungen eines einzigen Beleuchtungs-Teilstrahlenbündels zwar miteinander interferieren dürfen, aber über den Mittelungseffekt mehrerer derartiger Interferenzen in der Summe die Kohärenz zerstört wird. Hier können Maßnahmen vorgesehen werden, durch die mehrere Beleuchtungs-Teilstahlenbündel verschiedene Weglängendifferenzen erzeugen.

In den Figuren 5 und 6 ist eine inkrementale Meßvorrichtung schematisch dargestellt, die auf dem vorbeschriebenen Prinzip hinsichtlich der Kohärenz beruht. Lichtquelle L und Detektoren D0, D+1, D-1 entsprechen dabei denen, die zu den Figuren 1 und 2 beschrieben wurden.

Die Abtastplatte A' weist dabei Teilungsmarkierun gen auf, die transversal zur Meßrichtung X als Phasengitter ausgebildet sind. Der Abstand der Beugungselemente GS' gemäß Figur 5 ändert sich in Meßrichtung X nicht stetig mit dem Ort, wie etwa bei dem Ausführungsbeispiel gemäß der Figur 3, das speziell eine Referenzmarke betrifft.

Um die Interferenz der in Meßrichtung X aufgespaltenen Teilstrahlenbündel zu gewährleisten, müssen sie gleiche Weglängen aufweisen oder die Gitterkonstanten der transversalen phasenteilung GS ist wesentlich kleiner als die der Teilung TA in Meßrichtung X, so daß der Gangunterschied zwischen Teilstrahlenbündeln gleicher transversaler Beugungsordnungen klein ist, so daß die zeitliche Inkohärenz der Lichtquelle L oder unterschiedliche Strahlneigungen die Interferenz nicht nennenswert reduzieren können. Dies gilt jedoch nicht für Teilstrahlenbündel unterschiedlicher transversaler Beugungsordnungen.

Die Meßvorrichtung ist nicht darauf beschränkt, außer der nullten resultierenden Beugungsordnung die ± 1. Beugungsordnung zu erfassen. Es können auch Detektoren zur Erfassung anderer oder weiterer resultierender Beugungsordnungen vorgesehen sein.

Zur Bildung eines möglichst schmalen Referenzimpulses hoher Intensität J werden das Taktsignal ST und das Gegentaktsignal SG in an sich bekannter Weise in Differenz geschaltet und getriggert. Um den Referenzimpuls zu optimieren, wird erfindungsgemäß das Taktsignal ST durch optische Mittel beeinflußt. Hierzu befindet sich gemäß den Figuren 1 und 7 auf dem Maßstab M außer dem Bereich der Referenzmarke RM ein Teilungsfeld FM, dessen Gitterlinien in Meßrichtung X verlaufen. Die davon benachbarten Bereiche C1, C2, C3 der Oberfläche des Maßstabes M, welche den Detektoren D0, D+1, D-1 zugewandt sind, sind reflektierend ausgestaltet, beispielsweise durch Aufbringen einer Chromschicht.

Dem Teilungsfeld FM des Maßstabes M ist ein gleich großes transparentes Feld FA auf der Abtastplatte A zugeordnet. Der Referenzmarke RM des Maßstabes M ist ein auf der Abtastplatte A befindliches Abtastfeld RA zugeordnet, wie beispielsweise in Figur 3 dargestellt. Den Bereichen C1, C2, C3 des Maßstabes M sind auf der Abtastplatte A absorbierende Bereiche C4, C5, C6 zugeordnet.

In der näheren Umgebung des Referenzimpulsmaximums P1, bei der sich die Referenzmarke RM mit dem Abtastfeld RA sowie das Teilungsfeld FM mit dem Feld FA zumindest weitgehend überdecken, trifft Licht durch das Feld FA auf das Teilungsfeld FM und wird in ± 1. transversaler Beugungsordnung abgelenkt und gelangt auf die Detektoren D+1, D-1. Dabei weist das Transversalgitter TA die gleichen Gitterparameter wie das Gitter im Bereich FM auf.

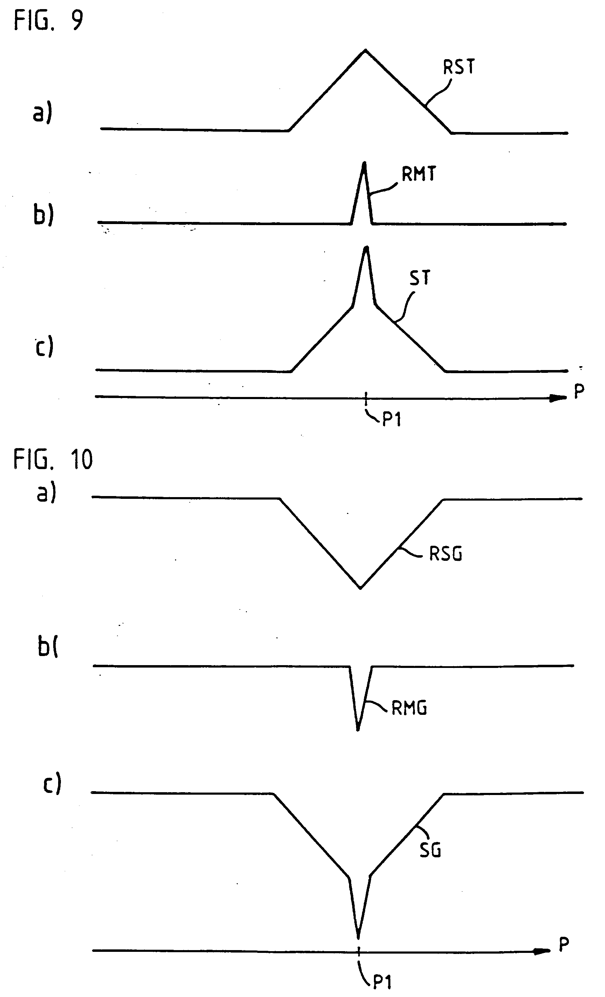

Diese Detektoren D+1, D-1 liefern das in Figur 9a dargestellte Regelsignal-Takt RST mit einem Maximum an dieser Position P1. Durch die Ablenkung des Lichtstrahlenbündels am Teilungsfeld FM weist das vom Detektor D0 erzeugte Regelsignal-Gegentakt RSG gemäß Figur 10a an dieser Position P1 ein Signalminimum auf. Das der Referenzmarke RM zugeordnete Lichtstrahlenbündel erzeugt mit dem Abtastfeld RA Teilstrahlenbündel, die analog der Beschreibung gemäß Figur 1 bis 4 auf die Detektoren D0, D+1, D-1 treffen. Ohne Berücksichtigung der Teilstrahlen, die zu den Signalverläufen gemäß Figur 9a, 10a führen, erhält man vom Detektor D0 das Referenzmarkensignal-Gegentakt RMG und von den Detektoren D+1, D-1 jeweils das Referenzmarkensignal-Takt RMT. Das Referenzmarkensignal-Gegentakt RMG ist in Figur 10b und das Referenzmarkensignal-Takt RMT ist in Figur 9b dargestellt. Durch die erfindungsgemäße optische Überlagerung der Signale RST und RMT auf den Detektoren D+1, D-1 wird das in Figur 9c dargestellte Taktsignal ST als Summensignal erzeugt. Durch optische Überlagerung der Signale RSG und RMG auf dem Detektor D0 wird das in Figur 10c dargestellte Gegentaktsignal SG als Summensignal erzeugt.

Durch das Zusammenwirken der Felder FA und FM bei der Abtastung wird außerhalb des Überdeckungsbereiches der zugehörigen Felder RM, RA bzw. FM, FA das Regelsignal-Gegentakt RSG angehoben und damit der Abstand der Signalpegel von Taktsignal ST und Gegentaktsignal SG vergrößert. Damit verringert sich die Störempfindlichkeit der Meßvorrichtung. Andererseits wird im Bereich der Überdeckung durch die Wirkung des Regelsignales-Takt RST das Taktsignal ST angehoben. Mittels einer variablen Blende B, beispielsweise einer Schraube, wird der Strahlengang der durch die Felder FA und FM hindurchtritt partiell abgeblendet, wodurch sich der Referenzimpuls relativ zum Triggerpegel einstellen läßt. Die Blende B kann sich zwischen Lichtquelle L und dem Bereich FM befinden. Diese Ausgestaltung führt also neben dem Referenzimpulsabgleich zu einer Vergrößerung des Störabstandes zwischen Taktsignal ST und Gegentaktsignal SG außerhalb des Referenzimpulsmaximums, wie in Figur 8 dargestellt. Der Signalpegel J ist als Funktion der Position P des Maßstabes M aufgetragen.

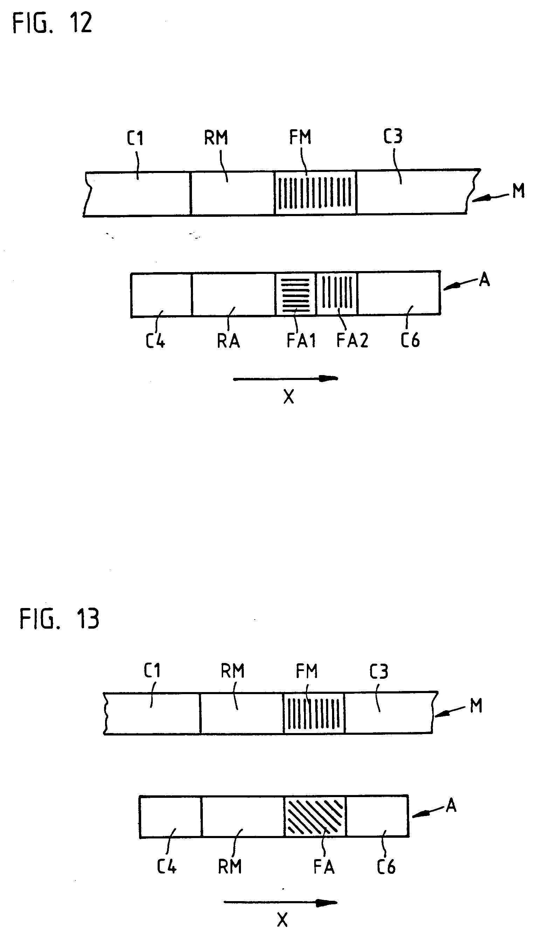

In Figur 11 sind auf dem Maßstab M die reflektierenden Bereiche C1, C2, C3 und das Teilungsfeld FM vertauscht. Damit erreicht man einen ähnlich günstigen Signalverlauf wie zu den Figuren 7 bis 10 beschrieben, wenn man die Referenzmarke RM derart ausgestaltet, daß in 0. transversaler Beugungsordnung das Taktsignal ST erzeugt wird. Wie zu Figur 7 beschrieben, kann zum Abgleich eine Blende dem transparenten Feld FA zugeordnet werden.

Bei den weiteren Ausführungsbeispielen gemäß den Figuren 12 und 13 haben die Gitterlinien der Teilungsfelder FM des Maßstabes M eine Orientierung senkrecht zur Meßrichtung X. Eine Ablenkung der auftreffenden Lichtstrahlenbündel erfolgt also in Meßrichtung X.

Auf der Abtastplatte A sind gemäß Figur 12 zwei Bereiche FA1, FA2 vorgesehen, die gemeinsam eine Länge entsprechend des Feldes FM besitzen. Im Bereich FA1 ist ein transversales Blaze-Gitter angeordnet, dessen Gitterkonstante so gewählt ist, daß die Fotoelemente D+1, D-1 der ± 1. transversalen Beugungsordnungen bei einer Überlappung des Feldes FA1 mit einem der reflektierenden Bereich C1 und C3 des Maßstabes M mit Licht beaufschlagt werden. Bei einer Position, in der sich die beiden Felder RM und RA überlappen befindet sich hinter dem Feld FA1 ein Gitterbereich des Feldes FM hoher Ortsfrequenz, welches alles Licht außerhalb der Detektoren D+1, D-1 der transversalen Beugungsordnung ablenkt. Hinter dem Feld FA2 befindet sich dasselbe Gitter hoher Ortsfrequenz. Die Gitterparameter der Felder FM und FA2 sind so gewählt, daß durch das Zusammenwirken beider Gitter in resultierender nullter Beugungsordnung, in der man das Taktsignal erzeugt, der Gleichlichtpegel angehoben wird, indem Licht auf D0 trifft.

In Figur 13 ist ein Beispiel dargestellt, bei dem die Orientierung der Gitterlinien des Feldes FA der Abtastplatte A relativ zur Meßvorrichtung X gesehen von 0 Grad sowie auch von 90 Grad abweicht. Wird das Feld FA zweimal von einem Lichtstrahlenbündel durchlaufen, weisen die resultierenden Beugungsordnungen keine Ablenkung in Meßrichtung X, sondern ausschließlich eine transversale Ablenkung auf, so daß das Licht auf die Detektoren D+1 und D-1 gelenkt wird und den Signalpegel erhöht. Die Orientierung der Gitterlinien muß der geometrischen Anordnung der Detektoren D+1, D-1 angepaßt werden.

Gemäß der Erfindung wird also der Abgleich realisiert durch das Zusammenwirken von zusätzlich auf Abtastplatte A und Maßstab M jeweils neben der Referenzmarke RM befindlichen Feldern. Diese Felder können transparent, reflektierend, als Gitter, Prismen, Holografisch-optische Elemente, Diffraktiv-optische Elemente etc. ausgebildet sein, sowohl abbildende als auch nicht abbildende Eigenschaften aufweisen. Ein definiertes Abschatten (verschiebbare Blende) bewirkt eine Regelung des Signalpegels von Taktsignal ST oder Gegentaktsignal SG.

Der erfindungsgemäße Abgleich ist besonders vorteilhaft realisierbar, indem Ablenkelemente FM in Form von Gitterbereichen neben der Maßverkörperung bzw. Referenzmarke RM auf dem Maßstab M und/oder neben der Abtastteilung RA auf der Abtastplatte A angeordnet sind. Durch definiertes Ablenken eines von der Lichtquelle L ausgehenden Lichtstrahlenbündels auf zumindest einen der Detektoren D+1, D-1, D0 ist somit ein optischer Signalabgleich besonders bei einer Referenzmarke RM, die aus einer gechirpten Teilung besteht vorteilhaft realisierbar, da alle Ortsfrequenzen der Referenzmarke RM gleichmäßig beeinflußt werden können und der Nutzanteil des durch Differenzschaltung von Takt- und Gegentaktsignal ST, SG gebildeten Referenzsignales nicht verkleinert wird.

Das zum Albgleich abgelenkte Lichtstrahlenbündel wird erfindungsgemäß direkt auf die Detektoren D0, D+1, D-1 gerichtet. Dadurch ist ein einfacher Aufbau mit möglichst wenig Bauelementen gewährleistet.

Die Erfindung ist bei Längen- und Winkelmeßeinrichtungen anwendbar, wobei die Abtastung im Durchlicht oder im Auflicht erfolgen kann.

## Patentansprüche

1. Positionsmeßvorrichtung zum Erzeugen von positionsabhängigen Signalen (RMT, RMG, ST, SG), mit
- wenigstens einer Beleuchtungseinrichtung (L),
- einer Maßverkörperung (M) mit Markierungen (TM), die eine Referenzmarke (RM) bilden,
- einer relativ dazu in Meßrichtung (X) verschiebbaren Abtastplatte (A) mit Markierungen (TA), die ein Abtastfeld (RA) zur Abtastung der Referenzmarke (RM) bilden,
- mehreren Photodetektoren (D0, D+1, D-1), auf welche durch die Markierungen (TA, TM) der Abtastplatte (A) und der Maßverkörperung (M) beeinflußte Lichtstrahlenbündel treffen und welche zwei positionsabhängige elektrische Signale (RMT, RMG) erzeugen, aus denen durch Differenzschaltung an einer vorgegebenen Relativlage (P1) zwischen der Abtastplatte (A) und der Maßverkörperung (M), an der sich die Referenzmarke (RM) mit dem Abtastfeld (RA) zumindest weitgehend überdeckt, ein Referenzmarkenimpuls gebildet wird, wobei die Maßverkörperung (M) und/oder die Abtastplatte (A) weiterhin zumindest einen zusätzlichen optisch wirksamen Bereich (FM, FA, C1 bis C6) aufweist,
dadurch gekennzeichnet, daß dieser zumindest eine zusätzliche optisch wirksame Bereich (FM, FA, C1 bis C6) in der genannten vorgegebenen Relativlage (P1) ein weiteres Lichtstrahlenbündel auf zumindest einen der genannten Detektoren (D+1, D-1) richtet und somit die Intensität (I) eines der positionsabhängigen elektrischen Signales (RMT) beeinflußt.

2. Positionsmeßvorrichtung nach Anspruch 1, dadurch gekennzeichnet, daß außerhalb der genannten vorgegebenen Relativlage (P1) durch einen zusätzlichen optisch wiksamen Bereich (FM, FA, C1 bis C6) ein weiteres Lichtstrahlenbündel auf einen weiteren der genannten Detektoren (D0) gerichtet ist und somit die Intensität (I) des weiteren positionsabhängigen Signals (RMG) beeinflußt.

3. Positionsmeßvorrichtung nach Anspruch 1 oder 2, dadurch gekennzeichnet, daß das Lichtstrahlenbündel des zumindest einem optisch wirksamen Bereiches (FM, FA, C1 bis C6) durch eine einstellbare Blende (B) begrenzt ist, so daß die Intensität (I) des positionsabhängigen elektrischen Signales (RMT, RMG) einstellbar ist.

4. Positionsmeßvorrichtung nach einem der Ansprüche 1 bis 3, dadurch gekennzeichnet, daß einer der optisch wirksamen Bereiche ein Ablenkelement (FM, FA, C1, C2, D3) zur Ablenkung eines auftreffenden Lichtstrahlenbündels ist.

5. Positionsmeßvorrichtung nach Anspruch 4, dadurch gekennzeichnet, daß das Ablenkelement ein Prisma oder ein Gitter (FM, FA, C1, C2, C3) ist.

6. Positionsmeßvorrichtung nach Anspruch 4 oder 5, dadurch gekennzeichnet, daß die Intensität des abgelenkten Lichtstrahlenbündels durch die Dimensionierung des Ablenkelementes (FM, FA, C1, C2, C3) selbst und/oder durch Beeinflussung des Wirkungsgrades des Ablenkelementes (FM, FA, C1, C2, C3) bestimmt ist.

7. Positionsmeßvorrichtung nach einem der vorhergehenden Ansprüche, dadurch gekennzeichnet, daß die Abtastplatte (A) und/oder die Maßverkörperung (M) als Markierung eine Teilung (TA) mit in Meßrichtung (X) hintereinander angeordneten Stegen (GS) besitzt, deren Stegbereiche (GS) wiederum aus einer Teilung mit quer zur Meßrichtung (X) hintereinander angeordneten Stegen besteht, und daß die auftreffenden und transversal aufgespaltenen Teilstrahlenbündel von senkrecht zur Meßrichtung (X) beabstandet angeordneten Detektoren (D0, D+1, D-1) zum Erzeugen der positionsabhängigen Signale (RMT, RMG, ST, SG) erfaßt werden.

8. Positionsmeßvorrichtung nach Anspruch 7, dadurch gekennzeichnet, daß der zumindest eine zusätzliche optisch wirksame Bereich der Abtastplatte (A) oder der Maßverkörperung (M) eine Teilung (FM, FA, C1, C2, C3) aufweist, dessen Strichrichtung in einem Winkel zur Meßrichtung (X) verläuft, der von neunzig Grad abweicht, und daß die an dieser Teilung (FM, FA, C1, C2, C3) transversal aufgespaltenen Teilstrahlenbündel auf zumindest einen der Detektoren (D+1, D-1) treffen.

9. Positionsmeßvorrichtung nach Anspruch 7, dadurch gekennzeichnet, daß der zumindest eine optisch wirksame Bereich ein Gitter (FM, FA, C1, C2, C3) ist, das die gleichen Gitterparameter aufweist wie die Stegbereiche (GS) der Markierungen (TA) der Abtastplatte (A).

10. Positionsmeßvorrichtung nach einem der vorhergehenden Ansprüche, dadurch gekennzeichnet, daß die zusätzlichen optisch wirksamen Bereiche (FM, FA, C1, C2, C3) in Meßrichtung (X) betrachtet neben den Markierungen (TM) der Referenzmarke (RM) der Maßverkörperung (M) und neben den Markierungen (TA) der Abtastplatte (A) angeordnet sind.

## Claims

1. Position measuring device for producing position-dependent signals (RMT, RMG, ST, SG), having
• at least one illuminating device (L),
• a material measure (M) with markings (TM) which form a reference mark (RM),
• a scanning plate (A) which is displaceable relative thereto in the measuring direction (X) and has markings (TA) which form a scanning field (RA) for scanning the reference mark (RM),
• several photodetectors (D0, D+1, D-1) on which light ray bundles influenced by the markings (TA, TM) of the scanning plate (A) and of the material measure (M) impinge and which produce two position-dependent electrical signals (RMT, RMG) from which a reference mark pulse is formed by differential connection to a preset relative position (P1) between the scanning plate (A) and the material measure (M) at which position the reference mark (RM) with the scanning field (RA) at least substantially overlaps; the material measure (M) and/or the scanning plate (A) having furthermore at least one additional optically effective region (FM, FA, C1 to C6),
characterised in that at least this one additional optically effective region (FM, FA, C1 to C6) in the already mentioned preset relative position (P1) directs a further light ray bundle onto at least one of the already mentioned detectors (D+1, D-1) and hence influences the intensity (I) of one of the position-dependent electrical signals (RMT).

2. Position measuring device according to claim 1, characterised in that outwith the already mentioned preset relative position (P1) a further light ray bundle is directed by an additional optically effective region (FM, FA, C1 to C6) onto a further detector of the already mentioned detectors (D0) and hence influences the intensity (I) of the further position-dependent signal (RMG).

3. Position measuring device according to claim 1 or 2, characterised in that the light ray bundle of at least one optically effective region (FM, FA, C1 to C6) is delimited by an adjustable screen (B) so that the intensity (I) of the position-dependent electrical signal (RMT, RMG) is adjustable.

4. Position measuring device according to one of the claims 1 to 3, characterised in that one of the optically effective regions is a deflection element (FM, FA, C1, C2, D3) for the purpose of deflecting an incident light ray bundle.

5. Position measuring device according to claim 4, characterised in that the deflection element is a prism or a grating (FM, FA, C1, C2, C3).

6. Position measuring device according to claim 4 or 5, characterised in that the intensity of the deflected light ray bundle is determined by the dimensioning of the deflection element (FM, FA, C1, C2, C3) itself and/or by influencing the efficiency of the deflection element (FM, FA, C1, C2, C3).

7. Position measuring device according to one of the preceding claims, characterised in that the scanning plate (A) and/or the material measure (M) has as a marking a division (TA) provided with webs (GS) disposed successively in the measuring direction (X), the web regions (GS) of which webs in turn comprise a division provided with webs disposed successively transversely relative to the measuring direction (X), and in that the incident and transversely split part ray bundles are detected by detectors (D0, D+1, D-1), which are disposed at a spacing perpendicular to the measuring direction (X), for the purpose of producing position-dependent signals (RMT, RMG, ST, SG).

8. Position measuring device according to claim 7, characterised in that at least one additional optically effective region of the scanning plate (A) or of the material measure (M) has a division (FM, FA, C1, C2, C3), the line direction of which extends at an angle to the measuring direction (X) which deviates from ninety degrees, and in that, at this division (FM, FA, C1, C2, C3), transversely split part ray bundles impinge on at least one of the detectors (D+1, D-1).

9. Position measuring device according to claim 7, characterised in that at least one optically effective region is a grating (FM, FA, C1, C2, C3) which has the same grating parameters as the web regions (GS) of the markings (TA) of the scanning plate (A).

10. Position measuring device according to one of the preceding claims, characterised in that the additional optically effective regions (FM, FA, C1, C2, C3) are disposed, as observed in the measuring direction (X), beside the markings (TM) of the reference mark (PM) of the material measure (M) and beside the markings (TA) of the scanning plate (A).

## Revendications

1. Dispositif de mesure de position pour la production de signaux de position (RMT, RMG, ST, SG), comprenant
- au moins un dispositif d'éclairage (L),
- une règle de mesure (M) portant des marquages (TM) qui forment une marque de référence (RM),
- une plaque d'exploration (A) mobile par rapport à ladite règle dans la direction de mesure (X) et comportant des marquages (TA) qui constituent un champ d'exploration (RA) pour l'exploration de la marque de référence (RM),
- plusieurs photodétecteurs (D0, D+1, D-1) sur lesquels tombent des faisceaux de rayons lumineux affectés par les marquages (TA, TM) de la plaque d'exploration (A) et de la règle de mesure (M) et qui produisent deux signaux électriques de position (RMT, RMG) à partir desquels est formée une impulsion de marque de référence par différenciation dans une position relative prédéterminée (P1) entre la plaque d'exploration (A) et la règle de mesure (M), position dans laquelle la marque de référence (RM) se trouve au moins substantiellement en recouvrement avec le champ d'exploration (RA), la règle de mesure (M) et/ou la plaque d'exploration (A) présentant, en outre, au moins une zone supplémentaire (FM, FA, C1 à C6) optiquement active,
caractérisé par le fait que ladite zone supplémentaire (FM, FA, C1 à C6) optiquement active dirige, dans ladite position relative (P1) prédéterminée, un faisceau de rayons lumineux supplémentaire sur au moins l'un desdits détecteurs (D+1, D-1) et affecte ainsi l'intensité (I) des signaux électriques de position (RMT).

2. Dispositif de mesure de position suivant la revendication 1, caractérisé par le fait qu'en dehors de ladite position relative (P1) prédéterminée, une zone supplémentaire (FM, FA, C1 à C6) optiquement active dirige un faisceau de rayons lumineux supplémentaire sur un autre desdits détecteurs (D0) et affecte ainsi l'intensité (I) de l'autre signal de position (RMG).

3. Dispositif de mesure de position suivant la revendication 1 ou 2, caractérisé par le fait que le faisceau de rayon lumineux de ladite zone supplémentaire (FM, FA, C1 à C6) optiquement active est délimité par un diaphragme réglable (B) de sorte que l'intensité (I) du signal électrique de position (RMT, RMG) soit réglable.

4. Dispositif de mesure de position suivant l'une des revendications 1 à 3, caractérisé par le fait que l'une des zones optiquement actives est un élément de déviation (FM, FA, C1, C2, C3) pour la déviation d'un faisceau de rayons lumineux incident.

5. Dispositif de mesure de position suivant la revendication 4, caractérisé par le fait que l'élément de déviation est un prisme ou un réseau (FM, FA, C1, C2, C3).

6. Dispositif de mesure de position suivant la revendication 4 ou 5, caractérisé par le fait que l'intensité du faisceau de rayons lumineux dévié est déterminée par le dimensionnement de l'élément de déviation (FM, FA, C1, C2, C3) lui-même et/ou par action sur le rendement de l'élément de déviation (FM, FA, C1, C2, C3).

7. Dispositif de mesure de position suivant l'une des revendications précédentes, caractérisé par le fait que la plaque d'exploration (A) et/ou la règle de mesure (M) comportent, en tant que marquage, une division (TA) avec des barres (GS) disposées les unes derrière les autres dans la direction de mesure (X), les zones des barres (GS) étant à leur tour constituées par une division avec des barres disposées les unes derrière les autres transversalement à la direction de mesure (X), et que les faisceaux de rayons partiels incidents, divisés transversalement, sont détectés par des détecteurs (D0, D+1, D-1) espacés perpendiculairement à la direction de mesure (X), en vue de la production des signaux de position (RMT, RMG, ST, SG).

8. Dispositif de mesure de position suivant la revendication 7, caractérisé par le fait que ladite zone supplémentaire, optiquement active, de la plaque d'exploration (A) ou de la règle de mesure (M) présente une division (FM, FA, C1, C2, C3) dont les traits sont dirigés par rapport à la direction de mesure (X) sous un angle qui est différent de quatre-vingt-dix degrés, et que les faisceaux de rayons partiels divisés transversalement sur cette division (FM, FA, C1, C2, C3) tombent sur au moins l'un des détecteurs (D+1, D-1).

9. Dispositif de mesure de position suivant la revendication 7, caractérisé par le fait que la zone optiquement active est un réseau (FM, FA, C1, C2, C3) qui présente les mêmes paramètres de réseau que les zones des barres (GS) des marquages (TA) de la plaque d'exploration (A).

10. Dispositif de mesure de position suivant l'une des revendications précédentes, caractérisé par le fait que les zones supplémentaires (FM, FA, C1, C2, C3) optiquement actives, considérées dans la direction de mesure (X), sont disposées à côté des marquages (TM) de la marque de référence (R) de la règle de mesure (M) et à côté des marquages (RM) de la plaque d'exploration (A).
